# EUROPEAN PATENT APPLICATION

(11) **EP 4 620 763 A1**
(43) Date of publication of application: **24.09.2025**
(21) Application number: 25155367.3
(22) Date of filing: 31.01.2025
(51) Int. Cl.: B60W 30/14, B60W 50/14

(54) **VEHICLE CONTROL SYSTEM**

(30) Priority: 22.03.2024 JP 2024046772
(71) Applicant: Suzuki Motor Corporation, Shizuoka 432-8611 (JP)
(72) Inventor: YAMANE, Ryuichi, HAMAMATSU-SHI (JP)
(74) Representative: Plasseraud IP

(57) **Abstract**

[Problem to be Solved]

To appropriately execute an ACC function in a vehicle control system, even in a case in which a road sign urging deceleration to a predetermined speed is installed.

[Solution]

A vehicle control system 1 configured to execute an ACC function of performing constant-speed travel according to a set vehicle speed when a preceding vehicle does not exist in a lane where a vehicle C is traveling, and performing following travel for maintaining a set inter-distance when a preceding vehicle exists, the vehicle control system including: a sign recognition unit 22 configured to recognize a road sign A urging vehicle speed V to be decelerated to a predetermined speed; a vehicle speed adjustment unit 23 configured to, when the road sign A is recognized by the sign recognition unit 22 during execution of the ACC function, execute vehicle speed adjustment control to adjust the vehicle speed V of the vehicle C; and a notification unit 24 configured to notify a driver that the vehicle speed adjustment control is to be executed by the vehicle speed adjustment unit 23; wherein the vehicle speed adjustment control includes: first control to decelerate the vehicle speed V to a first speed V1 when the road sign A is recognized by the sign recognition unit 22; and second control to decelerate the vehicle speed V to a second speed V2 less than the first speed V1 in response to a deceleration request by the driver while the first control is executed.

## Description

### [Technical Field]

The present invention relates to a vehicle control system configured to execute an adaptive cruise control function.

### [Background Art]

An adaptive cruise control (ACC) function is known which performs inter-distance control so that a vehicle travels maintaining an appropriate inter-distance, in order to support a driver's driving operation. While the ACC function is executed, acceleration and deceleration of a vehicle are controlled such that the vehicle follows a preceding vehicle, maintaining a set inter-distance, and the vehicle is controlled to travel at a set vehicle speed when there is no preceding vehicle. With regard to the ACC function, for example, Patent Literature 1 discloses a device configured to prevent a vehicle from accelerating when a situation around the vehicle satisfies a predetermined condition while the ACC function is executed. The device according to Patent Literature 1 is configured to cause a vehicle to decelerate without allowing acceleration when there is the end of a traffic jam, a railroad crossing, or a temporary stop sign within a predetermined range ahead of the vehicle.

### [Citation List]

### [Patent Literature]

[Patent Literature 1] JP 2013-086580 A

### [Summary of Invention]

### [Problem to be Solved by the Invention]

Meanwhile, on a road, a road sign for urging a vehicle to decelerate to a predetermined speed may be installed for traffic safety measures. The ACC function is generally configured to operate within a predetermined vehicle speed range. Within the vehicle speed range of the ACC function, however, there may be a case in which it is not possible to decelerate to a predetermined speed corresponding to the road sign. However, if a driver cancels the ACC function, each time he/she visually confirms the road sign, in order to manually decelerate by performing a driving operation by the driver according to the road sign, the convenience of the ACC function decreases.

The present invention has been made in view of the above situation, and an object thereof is to make it possible to appropriately execute the ACC function even in a case in which the road sign urging deceleration to a predetermined speed is installed.

### [Means for Solving the Problem]

According to an aspect of the present invention, a vehicle control system configured to execute an ACC function of performing constant-speed travel according to a set vehicle speed when a preceding vehicle does not exist in a lane in which a vehicle is traveling, and performing following travel for maintaining a set inter-distance when a preceding vehicle exists, the vehicle control system including: a sign recognition unit configured to recognize a road sign urging vehicle speed to be decelerated to a predetermined speed; a vehicle speed adjustment unit configured to, when the road sign is recognized by the sign recognition unit during execution of the ACC function, execute vehicle speed adjustment control to adjust the vehicle speed of the vehicle; and a notification unit configured to notify a driver that the vehicle speed adjustment control is to be executed by the vehicle speed adjustment unit; wherein the vehicle speed adjustment control includes: first control to decelerate the vehicle speed to a first speed when the road sign is recognized by the sign recognition unit; and second control to decelerate the vehicle speed to a second speed less than the first speed in response to a deceleration request by the driver while the first control is executed.

### [Advantageous Effect of Invention]

A vehicle control system according to the present invention can appropriately execute an ACC function even in a case in which a road sign urging deceleration to a predetermined speed is installed.

### [Brief Description of Drawings]

[Figure 1] Figure 1 is a block diagram showing a schematic configuration of a vehicle control system in one embodiment of the present invention.
[Figure 2] Figure 2 is a diagram showing change of a control mode and in vehicle speed over time when vehicle speed adjustment is executed.
[Figure 3] Figure 3 is a flowchart illustrating a flow of the vehicle speed adjustment control.

### [Mode for Carrying Out the Invention]

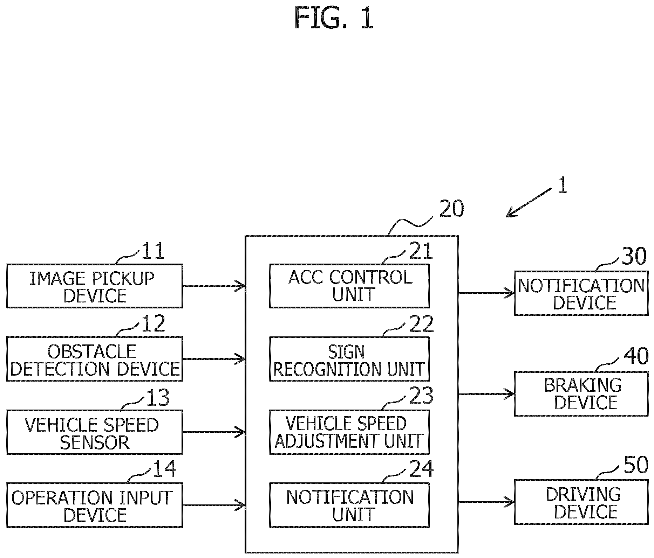

A vehicle control system according to one embodiment of the present invention will be described below in detail with reference to drawings. Figure 1 is a block diagram showing a schematic configuration of a vehicle control system 1 in the present embodiment. The vehicle control system 1 according to the present embodiment is configured to execute an ACC function of performing constant-speed travel according to a set vehicle speed when a preceding vehicle does not exist in a lane in which the vehicle is traveling, and performing following travel for maintaining a set inter-distance when a preceding vehicle exists in the lane.

As shown in Figure 1, the control system 1 includes a control device 20. Further, the control system 1 may optionally include an image pickup device 11, an obstacle detection device 12, a vehicle speed sensor 13 that detects the vehicle speed of the vehicle, an operation input device 14, a notification device 30, a braking device 40, and a driving device 50.

The image pickup device 11 is configured to pick up or capture an image of an area ahead of the vehicle. The image pickup device 11 is configured as a digital camera having an image sensor, for example a CCD or a CMOS and is configured to output information about the area ahead of the vehicle as a still image and/or video. Image data of the area ahead picked up by the image pickup device 11 is input to the control device 20.

The obstacle detection device 12 is configured to detect an obstacle ahead of the vehicle (for example, a preceding vehicle) and to measure a relative distance between the vehicle and the obstacle (an inter-vehicle distance). As the obstacle detection device 12, for example, a millimeter wave radar, a sonar sensor, a LiDAR (Light Detection and Ranging), or the like can be used. Measurement of the distance by the obstacle detection device 12 is dynamically executed in a predetermined measurement cycle. Obstacles detected by the obstacle detection device 12 include a road sign indicating existence of a protruding structure to be described later. The distance between the vehicle and the obstacle detected by the obstacle detection device 12 is input to the control device 20.

The operation input device 14 is configured to accept various operation inputs to the control device 20 by a user, for example, a driver. The operation input device 14 has, for example, an ACC switch operated by the driver to switch between on and off of the ACC function, a vehicle speed setting switch for setting a vehicle speed in the ACC function, a distance setting switch for setting an inter-vehicle distance in the ACC function, a deceleration request switch operated by the driver to request deceleration in vehicle speed adjustment control to be described later, a reset switch operated by the driver to return to normal operation of the ACC function during the vehicle speed adjustment control, and the like. In addition, the operation input device 14 may be configured, for example, as a touch panel integrated with a display of the notification device 30 to be described later. Furthermore, a configuration may be made so that a plurality of functions are assigned to one switch.

The control device 20 is configured with a computer that includes, for example, a ROM storing programs and data, a CPU that performs arithmetic processing, a RAM storing dynamic data and arithmetic processing results, and an input/output interface. The control device 20 is configured to execute functions of an ACC control unit 21, a sign recognition unit 22, a vehicle speed adjustment unit 23, a notification unit 24, and the like to perform control of the whole vehicle control system 1. Details of the control of the control device 20 will be described later.

The notification device (warning device) 30 is configured to warn an occupant of the vehicle in response to an instruction from the control device 20. The notification device 30 has, for example, a liquid crystal display, an indicator light, a speaker, or the like disposed on an instrument panel at a front part of the vehicle, and can provide information for the occupant through the visual and/or auditory senses.

The braking device 40 is a brake device that generates braking force according to an amount of stepping down of a brake pedal (not shown) by the driver, and includes a brake controller and a brake actuator for generating braking force in response to a braking instruction from a vehicle system or the control device 20.

The driving device 50 is configured to generate driving force for causing the vehicle to travel, and includes an engine controller (not shown) that controls the driving force according to an amount of stepping down of an accelerator pedal (not shown) by the driver or a control instruction from the control device 20. As the driving device 50 for the vehicle, for example, an internal combustion engine, or a motor may be used.

Next, control by the control device 20 will be described in detail. The control device 20 is configured to execute the ACC function based on image data of an area ahead of the vehicle input from the image pickup device 11, and an inter-vehicle distance to an obstacle input from the obstacle detection device 12, and the like, with the ACC control unit 21. Specifically, the ACC control unit 21 controls the braking device 40 and the driving device 50 to perform constant-speed travel according to a set vehicle speed (a target vehicle speed) input from the operation input device 14 when a preceding vehicle does not exist in a lane in which the vehicle is traveling in a state in which the ACC function is on. Furthermore, the ACC control unit 21 controls the braking device 40 and the driving device 50 to perform following travel for maintaining the set inter-vehicle distance input from the operation input device 14 when a preceding vehicle exists in the lane in which the vehicle is traveling in the state in which the ACC function is on.

The ACC function is configured to operate within a predetermined vehicle speed range (for example, about 30 km/h to about 100 km/h). Furthermore, the ACC function is configured such that the operation temporarily stops when the accelerator pedal is operated, and the operation stops when the brake pedal is operated.

On a road, a road sign for urging a vehicle to decelerate to a predetermined speed (a recommended speed) may be installed for traffic safety measures. As the road sign for urging a vehicle to decelerate to a predetermined speed, a slowdown sign for causing a vehicle to slow down, a temporary stop sign for causing a vehicle to temporarily stop, and the like are included. Here, in particular, a road sign will be taken up which is installed in combination with a physical device installed on a road to urge deceleration of the vehicle speed of a vehicle to a predetermined speed that is greater than 0 km/h.

The physical device installed on a road to urge deceleration of the vehicle speed to a predetermined speed is, for example, a protruding structure installed on the road surface of a road. The protruding structure is a raised part of the road surface, and a vehicle passing over it shakes up and down, thereby a driver who sees the raised part is urged to decelerate. Such a protruding structure is also referred to as a speed breaker, a speed bump, a hump, or the like and is installed for the purpose of reducing vehicle speed to, for example, about 40 km/h or less, about 30 km/h or less, or about 25 km/h or less.

At a predetermined distance before the protruding structure, a road sign (a caution sign) indicating that the protruding structure is installed on the road is installed. This road sign indicates that the protruding structure urging deceleration to a predetermined speed exists, and urges deceleration of the vehicle speed to the predetermined speed. A distance from the road sign to the protruding structure is, for example, about 30 to 50 m, depending on the type of the protruding structure and rules of the country or region where the protruding structure is installed. In the case of the driver manually performing a driving operation, when the driver visually confirms the road sign, he/she recognizes that there is a speed breaker ahead and operates the brake pedal to decelerate, passes over the speed breaker in a state of maintaining the low vehicle speed, and, after passing over the speed breaker, operates the accelerator pedal to accelerate.

In a case in which the ACC function is not configured to decelerate for a protruding structure, the vehicle performing the constant-speed travel by the ACC function passes over the protruding structure at the set vehicle speed. Furthermore, while performing the following travel by the ACC function, when a preceding vehicle decelerates in order to pass over the protruding structure, the vehicle also decelerates, but when the preceding vehicle accelerates after passing over the protruding structure, the vehicle also accelerates to pass over the protruding structure in the state of acceleration. As such, when the vehicle passes over the protruding structure at the set vehicle speed or while following the preceding vehicle with the operation of the ACC function as above, a person in the vehicle may feel uncomfortable or the vehicle body or cargo may be unnecessarily damaged.

For example, a consideration will be made on a case in which a speed breaker is installed as the protruding structure. For example, in India, speed breakers are introduced for traffic safety measures and are installed to urge reduction in vehicle speed to a predetermined speed or lower. A recommended speed to pass over the speed breakers is about 25 km/h. However, an amount of protrusion of each speed breaker from a road surface is large, and many drivers decelerates up to about 10 km/h, which approximately corresponds to a speed of a creep phenomenon, to pass through the speed breaker in actual traffic flows.

Considering such an actual situation, there is a possibility that, even if the vehicle speed is decreased to a lower limit speed (for example, about 30 km/h) within a predetermined vehicle speed range of the ACC function (for example, about 30 km/h to about 100 km/h) for a speed breaker, shocks at the time of passing over the speed breaker cannot be sufficiently reduced. However, if the driver operates the brake pedal each time visually confirming a road sign before a speed breaker, in order to decelerate in response to the road sign, the ACC function is cancelled, and the convenience of the ACC function decreases.

Therefore, in the vehicle control system 1 according to the present embodiment, a configuration is made to adjust the ACC function such that the ACC function can be appropriately executed even when a road sign urging deceleration to a predetermined speed is installed. Therefore, the control device 20 further includes the sign recognition unit 22, the vehicle speed adjustment unit 23, and the notification unit 24. Hereinafter, an example will be described in which a speed breaker for urging reduction in vehicle speed to about 25 km/h or lower is installed as the protruding structure, and a road sign indicating that the speed breaker is installed is recognized as the road sign.

The sign recognition unit 22 is configured to recognize a road sign urging deceleration to a predetermined speed installed ahead in a travel direction on a road on which the vehicle is traveling, based on image data of an area ahead of the vehicle input from the image pickup device 11. Specifically, the sign recognition unit 22 recognizes a road sign indicating that a speed breaker for urging deceleration is installed on the road surface of the road. Furthermore, the sign recognition unit 22 can recognize a distance to the recognized road sign, based on information about a distance to an obstacle input from the obstacle detection device 12.

The vehicle speed adjustment unit 23 is configured to, when the road sign is recognized by the sign recognition unit 22 during the execution of the ACC, execute the vehicle speed adjustment control to adjust the vehicle speed of the vehicle while maintaining the ACC function. Specifically, the vehicle speed adjustment control executed by the vehicle speed adjustment unit 23 includes first control to decelerate the vehicle speed to a first speed when a road sign is recognized by the sign recognition unit 22; and second control to decelerate the vehicle speed to a second speed less than the first speed in response to a deceleration request by the driver while the first control is executed. That is, the vehicle speed adjustment control is configured to decelerate the vehicle speed in two stages to pass over a speed breaker.

The notification unit 24 is configured to notify or inform the driver that the vehicle speed adjustment control is to be executed by the vehicle speed adjustment unit 23, via the notification device 30. As the notification to the driver, for example, a mark indicating a speed breaker may be displayed on the display, or a buzzer sound may be made.

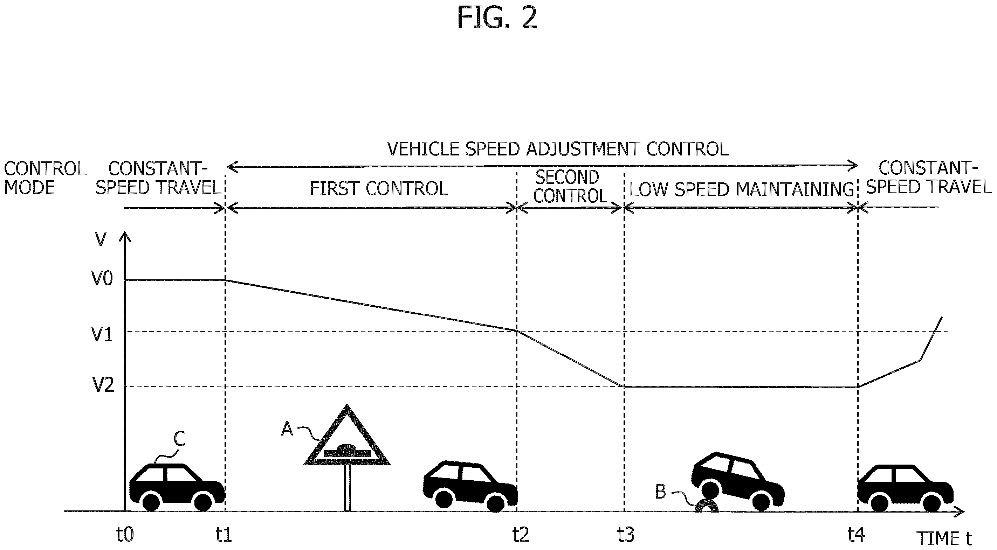

Next, details of the vehicle speed adjustment control will be described with reference to Figure 2. Figure 2 shows an example of temporal change of the control mode and in vehicle speed V after recognizing a road sign A indicating existence of a speed breaker until a vehicle C passes through a speed breaker B. The control mode of the ACC function at time t0 is a constant-speed travel mode. The control mode of the ACC function switches from the constant-speed travel mode to a first control mode, a second control mode, and a low-speed maintaining mode in that order, and returns to the constant-speed travel mode after passing over the speed breaker B. During the period shown in Figure 2, the on state of the ACC function is maintained, and the first control mode, the second control mode, and the low-speed maintaining mode are modes of the vehicle speed adjustment control. In the example of Figure 2, the road sign A indicating that the speed breaker B is installed is installed at a position a predetermined distance (for example, 40 m) before the speed breaker B.

### (1) First control mode

When a first control condition is met at time t1, the control mode of the ACC function switches from the constant-speed travel mode to the first control mode. That is, the vehicle speed adjustment control for adjusting the vehicle speed for the speed breaker B is started. At this time, an occupant of the vehicle C is notified that the vehicle speed adjustment control is to be executed, through the notification device 30. For example, the notification device 30 displays a mark indicating that the vehicle speed adjustment control is to be executed. Together with or instead of display of the mark, a buzzer sound may be made by the notification device 30 to notify or alert that the first control of the vehicle speed adjustment control is to be started.

When all of the following conditions (a) to (d) are satisfied, the vehicle speed adjustment unit 23 judges that the first control condition is met.
(a) Recognition of the road sign A indicating that the speed breaker B is installed
(b) The ACC function being in operation
(c) The vehicle speed V being equal to or less than an upper limit threshold Vt
(d) The vehicle being traveling straight ahead

### (a) Recognition of the road sign A indicating that the speed breaker B is installed

The sign recognition unit 22 recognizes the road sign A installed ahead of the vehicle C, based on image data input from the image pickup device 11 and information about a distance to an obstacle input from the obstacle detection device 12. When the road sign A is recognized, the sign recognition unit 22 also recognizes a distance to the road sign A. In the example shown in Figure 2, the distance from the vehicle C to the road sign A at the time t1 when the road sign A is recognized by the sign recognition unit 22 is about 30 m. The distance may fluctuate depending on the detection performance of the image pickup device 11 and the obstacle detection device 12, presence/absence of an obstacle that hinders visibility of the road sign A, and the like.

### (b) The ACC function being in operation

Though an example of the constant-speed travel mode is shown in Figure 2, it is also judged that the ACC function is operating in a case in which the vehicle is in the following travel mode of the ACC function.

### (c) The vehicle speed V being equal to or less than the upper limit threshold Vt

When the vehicle speed V is within a high vehicle speed range exceeding the upper limit threshold Vt, the vehicle speed may not be sufficiently decelerated before reaching the speed breaker B through the vehicle speed adjustment control including the first control and the second control, and there is also a possibility of misdetection of the road sign A. In a case in which the road sign A is misdetected, and the vehicle C is decelerated through the vehicle speed adjustment control, there is a high risk of the vehicle C being collided from behind by a following vehicle traveling behind the vehicle C. Therefore, when the vehicle speed V detected by the vehicle speed sensor 13 is in the high vehicle speed range exceeding the upper limit threshold Vt (for example, about 60 km), the vehicle speed adjustment control is prevented from starting.

### (d) The vehicle being traveling straight ahead

The speed breaker B is basically installed on a straight road. If the road sign A is recognized when the vehicle C is traveling on a curve, there is a possibility of misdetection. Furthermore, if deceleration is performed by the vehicle speed adjustment control during travel on a curve, the steerability of the vehicle C may be affected. Therefore, the vehicle speed adjustment control is prevented from being executed while the vehicle C is traveling on a curve. Whether the vehicle C is traveling straight ahead or not can be determined based on a signal from a steering angle sensor, not shown, the current position of the vehicle C, map information from a map information database, and the like.

When it is determined that the first control condition is met, the vehicle speed adjustment unit 23 starts the vehicle speed adjustment control for adjusting the vehicle speed V for the speed breaker B. The control mode of the ACC function switches from the constant-speed travel mode to the first control mode, and the vehicle speed adjustment unit 23 executes the first control to decelerate the vehicle speed V to a first speed V1. The first speed V1 may be, for example, a lower limit speed that can be set in the ACC function (for example, about 30 km/h). It is preferred that the first speed V1 is greater than a predetermined speed to which the speed breaker B urges deceleration (about 25 km/h). The vehicle speed adjustment unit 23 transmits an instruction to the braking device 40 to decelerate to the first speed V1 at a first deceleration rate a1 that is set to an appropriate value in advance. Thereby, the vehicle speed V automatically decreases from a set vehicle speed V0 to the first speed V1 at the first deceleration rate a1.

The first deceleration rate a1 may be a fixed value or may be a variable value. In the case of setting the first deceleration rate a1 to be variable, it may be set, for example, based on a distance from the vehicle C to the road sign A at the time of the road sign A being recognized by the sign recognition unit 22. The first deceleration rate a1 may be set to be greater as the distance between the vehicle C and the road sign A is shorter. The distance from the vehicle C to the road sign A at the time of the road sign A being recognized may fluctuate depending on the detection performance of the image pickup device 11 and the obstacle detection device 12, presence/absence of an obstacle that hinders visibility of the road sign A, and the like. Therefore, by setting a greater value for the first deceleration rate a1 as the distance between the vehicle C and the road sign A is shorter, it is possible to sufficiently decelerate the vehicle speed V before reaching the speed breaker B.

When the accelerator pedal is operated by the driver while the first control is executed, the vehicle speed adjustment unit 23 allows increase in the vehicle speed V according to the accelerator pedal operation, prioritizing the intention to accelerate by the driver. That is, when the accelerator pedal is operated in the first control mode in which the vehicle speed is greater than the first speed V1 (an end condition to be described later is met), the vehicle speed adjustment control ends, and the normal operation of the ACC function is returned to. As described above, while the accelerator pedal is operated, operation of the ACC function temporarily stops; and, when the driver takes his/her foot off the accelerator pedal, the operation of the ACC function is resumed, and the vehicle speed accelerates to the set vehicle speed V0 of the ACC function. In this case, in order to prevent the vehicle speed from unnecessarily increasing before the speed breaker B, an acceleration rate for accelerating to the set vehicle speed V0 may be set to a value less than an acceleration rate in the normal operation of the ACC function. Thereby, the vehicle is prevented from unnecessarily accelerating before passing through the speed breaker B.

Furthermore, it is conceivable that, when a preceding vehicle is present ahead of the vehicle C, the preceding vehicle significantly decelerates in order to pass over the speed breaker B. Therefore, a configuration may be made so as to, when a preceding vehicle is present, cause the vehicle C to decelerate at a deceleration rate greater than the first deceleration rate a1 to avoid the risk of colliding with the preceding vehicle that is decelerating. The deceleration rate in this case may be, for example, the maximum deceleration rate in the ACC function.

### (2) Second control mode

When a second control condition is met at time t2, the control mode of the ACC function switches from the first control mode to the second control mode. When the following conditions (e) and (f) are satisfied, the vehicle speed adjustment unit 23 judges that the second control condition is met. At this time, the occupant of the vehicle C is notified or warned that the second control of the vehicle speed adjustment control is to be executed, by the notification device 30. For example, the notification device 30 continuously displays the mark displayed in the first control mode. Together with or instead of display of the mark, a buzzer sound may be made through the notification device 30 to notify that the second control of the vehicle speed adjustment control is to be started.
(e) The first control condition being met
(f) A deceleration request being made by the driver

### (e) The first control condition being met

The vehicle speed adjustment unit 23 allows transition to the second control mode only when the first control mode is being executed.

### (f) A deceleration request being made by the driver

The speed breaker B is a protruding part installed on the road surface of a road, and it is difficult to detect existence of the speed breaker B by the image pickup device 11 and the obstacle detection device 12 and to accurately detect a distance from the vehicle C to the speed breaker B. Therefore, the vehicle speed adjustment unit 23 cannot determine an optimal deceleration timing based on information input from the image pickup device 11 and the obstacle detection device 12. Therefore, the vehicle speed adjustment unit 23 determines a deceleration timing based on a deceleration request from the driver who visually recognizes the speed breaker B. The deceleration request from the driver can be determined, for example, based on an operation of the deceleration request switch of the operation input device 14. In a state in which the vehicle speed V is decelerating by the first control, the driver can decide the deceleration timing by operating the deceleration request switch of the operation input device 14 at a desired timing.

When it is judged by the vehicle speed adjustment unit 23 that the second control condition is met, the control mode of the ACC function switches from the first control mode to the second control mode. The vehicle speed adjustment unit 23 executes the second control to decelerate the vehicle speed V to a second speed V2 less than the first speed V1.

It is preferred that the second speed V2 is the predetermined speed to which the speed breaker B urges deceleration (about 25 km/h) or lower and is a low vehicle speed suitable for the vehicle to safely pass over the speed breaker B. For example, in consideration of the vehicle speed at the time of the driver passing over the speed breaker B in an actual traffic flow, the second speed V2 may be, for example, about 10 km/h which roughly corresponds to the vehicle speed of the creep phenomenon. The vehicle speed adjustment unit 23 transmits an instruction to the braking device 40 to decelerate to the second speed V2 at a second deceleration rate a2 set to an appropriate value in advance. Thereby, the vehicle speed V automatically further decreases from the first speed V1 to the second speed V2 at the second deceleration rate a2.

Here, the second deceleration rate a2 is set to a value greater than the first deceleration rate a1 (a2>a1). Even when the first deceleration rate a1 is set variable as described above, a2>a1 still holds. Since the first control described above automatically starts when the road sign A is recognized by the sign recognition unit 22, the first deceleration rate a1 is set to a smaller value so as to slowly decelerate the vehicle C without giving an excessive load on the driver. On the other hand, since the second control starts by an operation of the deceleration request switch on which the intention to decelerate by the driver is reflected, the second deceleration rate a2 is set to a greater value so as to enable sufficient deceleration before the speed breaker B. Each of the first deceleration rate a1 and the second deceleration rate a2 is set to an appropriate value based on test data and the like. It is possible to, by setting each of the first deceleration rate a1 and the second deceleration rate a2 as described above, slowly decelerate at a stage of being away from the speed breaker B (the first control mode) and sufficiently decelerate at a stage of coming near to the speed breaker B (the second control mode), and it is possible to improve the performance of travel over the speed breaker B.

When the accelerator pedal is operated by the driver while the second control is executed, the vehicle speed adjustment unit 23 permits increase in the vehicle speed V according to the accelerator pedal operation, prioritizing the intention to accelerate by the driver. When the accelerator pedal is operated in the second control mode in which the vehicle speed V is less than the first speed V1, and the vehicle speed V increases and exceeds the first speed V1 (the end condition to be described later is met), the vehicle speed adjustment control ends, and the normal operation of the ACC function is returned to. When the vehicle speed at the time of the driver taking his/her foot off the accelerator pedal is the first speed V1 or less however, the vehicle speed adjustment unit 23 continues the operation of the vehicle speed adjustment control.

In the case of continuing the operation of the vehicle speed adjustment control after the operation of the accelerator pedal, the vehicle speed adjustment unit 23 decelerates the vehicle speed V to the second speed V2. That is, deceleration is resumed from the point of time when the driver takes his/her foot off the accelerator pedal. The deceleration rate here may be, for example, the second deceleration rate a2 described above. Or alternatively, the vehicle speed adjustment unit 23 may maintain the vehicle speed V at the speed at the time of the accelerator pedal being released (<the first speed V1).

### (3) Low-speed maintaining mode

When the vehicle speed V decreases to the second speed V2 at time t3, the control mode of the ACC function switches from the second control mode to the low-speed maintaining mode. The vehicle speed adjustment unit 23 maintains the second speed V2 so that the vehicle C can safely pass over the speed breaker B at a low speed. The low-speed maintaining mode can be said to be a part of the second control mode.

When the accelerator pedal is operated by the driver while the low-speed maintaining mode is executed, the vehicle speed adjustment unit 23 allows increase in the vehicle speed V according to the accelerator pedal operation, prioritizing the intention to accelerate by the driver. When the accelerator pedal is operated in the low-speed maintaining mode in which the vehicle speed V is less than the first speed V1, and the vehicle speed V increases and exceeds the first speed V1 (the end condition to be described later is met), the vehicle speed adjustment control ends, and the normal operation of the ACC function is returned to. When the vehicle speed V at the time of the driver taking his/her foot off the accelerator pedal is the first speed V1 or less, however, the vehicle speed adjustment unit 23 continues the operation of the vehicle speed adjustment control. That is, deceleration to the second speed V2 is performed from the point of time when the driver takes his/her foot off the accelerator pedal, and the second speed V2 is maintained.

### (4) Constant-speed travel mode

When a predetermined end condition is met at time t4 after the vehicle C passes over the speed breaker B, the control mode of the ACC function switches from the low-speed maintaining mode to the constant-speed travel mode. That is, the vehicle speed adjustment control ends, and the normal operation of the ACC function is returned to. At this time, the mark indicating that the vehicle speed adjustment control is being executed, which has been displayed on the information device 30, is eliminated.

The predetermined end condition includes the following conditions (g) to (i), and the vehicle speed adjustment unit 23 judges that the end condition is met when any one of the following conditions (g) to (i) is satisfied.
(g) Traveling by a predetermined distance (an end judgment distance) after recognizing the road sign A
(h) A request to return to the ACC function by a switch operation by the driver
(i) Acceleration to a predetermined speed or greater by an accelerator pedal operation by the driver.

### (g) Traveling by a predetermined distance (an end judgment distance) after recognizing the road sign A

After passing over the speed breaker B, it is not necessary to maintain the second speed V2 which is a low vehicle speed for passing over the speed breaker B. Therefore, when a predetermined distance by which it can be judged that the speed breaker B has been passed over has been traveled after recognizing the road sign A, that is, after the vehicle speed adjustment control being started, it is desirable to immediately end the vehicle speed adjustment control. The distance from the road sign A to the speed breaker B is generally set to a predetermined specified distance (for example, about 40 m). By adding a distance from the vehicle C to the road sign A at the time t1 when the road sign A is recognized to start the vehicle speed adjustment control (for example, about 30 m) and the specified distance from the road sign A to the speed breaker B together, a distance from the position of the vehicle C to the speed breaker B at the time t1 when the vehicle speed adjustment control is started can be estimated.

Therefore, the vehicle speed adjustment unit 23 sets an end judgment distance based on the distance from the position of the vehicle C to the speed breaker B at the time t1 when the road sign A is recognized, and judges that the end condition is met if it is determined that the end judgment distance has been traveled from the position of the vehicle C at the time t1 when the road sign A was recognized. Thereby, the vehicle speed adjustment control ends, and the normal operation mode of the ACC function is returned to. The vehicle C accelerates to the set vehicle speed V0 employed before start of the vehicle speed adjustment control and travels in the constant-speed travel mode or the following travel mode.

### (h) A request to return to the ACC function by a switch operation by the driver

The reset switch of the operation input device 14 is a switch to be operated to return to the normal operation mode (the constant-speed travel mode or the following travel mode) of the ACC function. An operation of the reset switch can be understood as an intention to return to the normal mode of the ACC function or an intention to accelerate by the driver. If the reset switch of the operation input device 14 is operated by the driver during the vehicle speed adjustment control, it is conceivable that the driver has an intention to accelerate from the state of being decelerated by the vehicle speed adjustment control to the constant-speed travel mode or the following travel mode of the ACC function.

Therefore, when it is detected that the reset switch of the operation input device 14 has been operated, the vehicle speed adjustment unit 23 judges that the end condition is met, and ends the vehicle speed adjustment control to prioritize the driver's intention. In this case, the control mode of the ACC function returns to the constant-speed travel mode with the set vehicle speed V0 or the following travel mode which was executed before start of the vehicle speed adjustment control. In any of the first control mode, the second control mode, and the low-speed maintaining mode, the vehicle speed adjustment unit 23 can judge, when the reset switch is operated, that the end condition is met and end the vehicle speed adjustment control.

### (i) Acceleration to a predetermined speed or greater by an accelerator pedal operation by the driver

Since the speed breaker B is installed for the purpose of reducing the vehicle speed V to about 25 km/h or lower, it can be understood, when acceleration to a predetermined speed exceeding 25 km/h has been performed by an accelerator pedal operation during the vehicle speed adjustment control, that the driver intends to accelerate. Therefore, when the vehicle speed V detected by the vehicle speed sensor 13 is the predetermined speed or greater, the vehicle speed adjustment unit 23 judges that the end condition is met, and ends the vehicle speed adjustment control to prioritize the driver's intention. In this case, the control mode of the ACC function returns to the constant-speed travel mode with the set vehicle speed V0 or the following travel mode which was performed before start of the vehicle speed adjustment control. In any of the first control mode, the second control mode, and the low-speed maintaining mode, the vehicle speed adjustment unit 23 may judge, when the vehicle speed V increases to the predetermined speed or greater, that the end condition is met and end the vehicle speed adjustment control.

Here, the predetermined speed for judging whether or not there is the driver's intention to accelerate is a value greater than the recommended speed (for example, 25 km/h) for passing over a speed breaker and may be set, for example, to the lower limit speed (for example, about 30 km/h) that can be set in the ACC function. In this case, the predetermined speed for judging whether or not there is the driver's intention to accelerate is the same value as the first speed V1. For example, in the low-speed maintaining mode in which the second speed V2 is maintained, when the accelerator pedal is operated, and the vehicle speed accelerates to the first speed V1 or greater, the vehicle speed adjustment control ends. Thereby, the driver's intention to accelerate can be prioritized, and it is possible to, for example, when the road sign A is misdetected by the sign recognition unit 22, immediately end the vehicle speed adjustment control and return to the normal control of the ACC function.

When it is judged by the vehicle speed adjustment unit 23 that the end condition is met, the vehicle speed adjustment control ends, and the normal operation mode of the ACC function is returned to. The vehicle C gradually accelerates to the set vehicle speed V0 used before start of the vehicle speed adjustment control and travels in the constant-speed travel mode or the following travel mode.

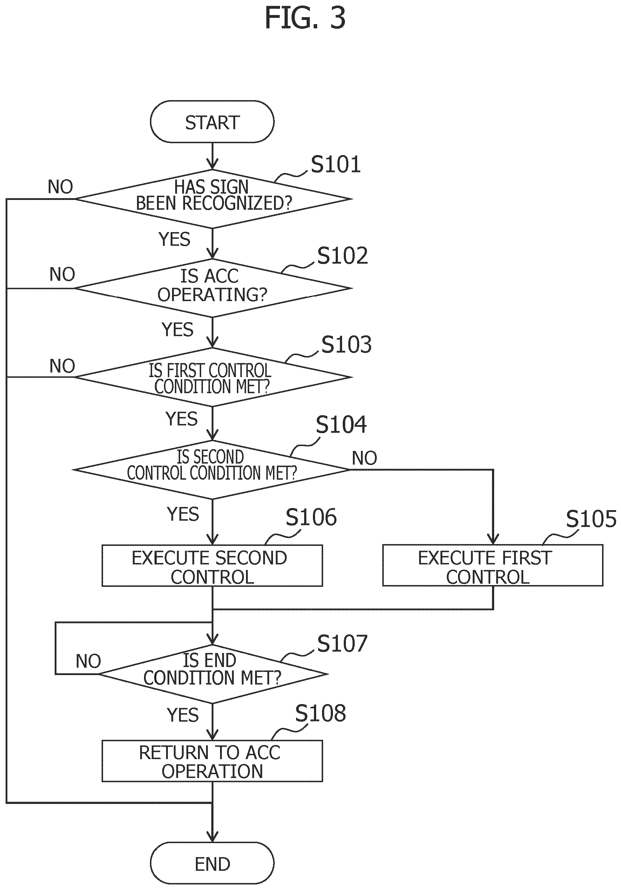

A description will be made on a flow of the vehicle speed adjustment control executed for a speed breaker while the ACC function is operating in the present embodiment, using a flowchart in Figure 3. Figure 3 shows an example of a process of the vehicle speed adjustment control, which is periodically executed in the control device 20.

At step S101, the vehicle speed adjustment unit 23 judges whether the road sign A, indicating that the speed breaker B is installed, is recognized by the sign recognition unit 22 or not. The sign recognition unit 22 recognizes the road sign A installed ahead in a travel direction on a road on which the vehicle is traveling, based on image data of an area ahead of the vehicle input from the image pickup device 11 and information input from the obstacle detection device 12. If the road sign A is recognized, the sign recognition unit 22 also recognizes a distance between the recognized road sign A and the vehicle. If the road sign A is recognized by the sign recognition unit 22, the process proceeds to step S 102. If the road sign A is not recognized, the process is ended.

At step S102, the vehicle speed adjustment unit 23 judges whether the ACC function is operating or not. If the ACC function has been turned on by the ACC switch of the operation input device 14, and the operation of the ACC function has not been temporarily stopped by an operation of the accelerator pedal or the like, it is judged that the ACC function is operating, and the process proceeds to step S103. If the ACC function is not operating, this process is ended.

At step S103, the vehicle speed adjustment unit 23 judges whether the first control condition described above is met or not. Specifically, it is judged whether all of the following conditions of (a) to (d) are met or not: (a) recognition of the road sign A indicating that the speed breaker B is installed, (b) the ACC function being in operation, (c) the vehicle speed V being equal to or less than the upper limit threshold Vt; and (d) the vehicle being traveling straight ahead. Since it has been judged at steps S101 and S102 that the conditions (a) and (b) are satisfied, the vehicle speed adjustment unit 23 judges whether the conditions (c) and (d) are further satisfied or not.

If the vehicle speed V is equal to the upper limit threshold Vt or less, and the vehicle is being traveling straight, then the vehicle speed adjustment unit 23 judges that all of the conditions (a) to (d) are satisfied, and the first control condition is met, and the process proceeds to step S104. If the first control condition is not met, this process is ended.

At step S104, the vehicle speed adjustment unit 23 judges whether the second control condition described above is met or not. Specifically, both of (e) the first control condition having been met and (f) a deceleration request by the driver is made, are satisfied or not. Since it has been judged at step S103 that the condition (e) is satisfied, the vehicle speed adjustment unit 23 judges whether the condition (f) is satisfied or not. If, for example, the deceleration request switch of the operation input device 14 is operated by the driver, the vehicle speed adjustment unit 23 judges that the conditions (e) and (f) are satisfied, and the second control condition is met, and the process proceeds to step S106. If the second control condition is not met, the process proceeds to step S105.

At step S105, the vehicle speed adjustment unit 23 executes the first control described above. Specifically, the vehicle speed adjustment unit 23 transmits an instruction to the braking device 40 to decelerate to the first speed V1 at the first deceleration rate a1. Further, the notification unit 24 transmits an instruction to the notification device 30 to display a mark indicating that the vehicle speed adjustment control is to be executed and make a buzzer sound notifying that the vehicle speed adjustment control is to be started. Thereby, the vehicle speed adjustment control starts, and the control mode transitions from the constant-speed travel mode or the following travel mode to the first control mode.

At step S106, the vehicle speed adjustment unit 23 executes the second control described above. Specifically, the vehicle speed adjustment unit 23 transmits an instruction to the braking device 40 to decelerate to the second speed V2 at the second deceleration rate a2. Thereby, the control mode transitions from the first control mode to the second control mode. After the vehicle speed V decreases to the second speed V2, the control mode transitions to the low-speed maintaining mode, and the vehicle speed adjustment unit 23 transmits an instruction to the braking device 40 and the driving device 50 to travel while maintaining the second speed V2. In the second control mode and the low-speed maintaining mode, the mark indicating that the vehicle speed adjustment control is executed is continuously displayed.

At step S107, the vehicle speed adjustment unit 23 judges whether the end condition described above is met or not. Specifically, it is judged that the end condition is met if any one of (g) the predetermined distance (the end judgment distance) having been traveled after recognizing the road sign A, (h) a request to return the ACC function being made by a switch operation by the driver, and (i) acceleration to the predetermined speed or higher being performed by an accelerator pedal operation by the driver, is satisfied. If the predetermined distance has been traveled after recognizing the road sign A, if the reset switch of the operation input device 14 has been operated by the driver, or if the vehicle speed V has increased to the first speed V1 or higher by an operation of the accelerator pedal by the driver, the vehicle speed adjustment unit 23 judges that the end condition is met, and the process proceeds to step S108. If the end condition is not met, the process of step S107 is repeated.

At step S108, the vehicle speed adjustment control ends, and the operation of the ACC function that was being executed before start of the vehicle speed adjustment control is returned to. The vehicle speed adjustment unit 23 transmits an instruction to the braking device 40 and the driving device 50 to gradually accelerate to the set vehicle speed V0 of the ACC function. As the vehicle speed adjustment control ends, the mark indicating that the vehicle speed adjustment control is executed, which has been displayed by the notification device 30, goes off. Thereby, the process shown in Figure 3 ends.

In the vehicle control system 1 according to the present embodiment described above, the following operation and effects can be achieved.
(1) The vehicle control system 1 is configured to execute the ACC function of performing constant-speed travel according to the set vehicle speed V0 when a preceding vehicle does not exist in a lane in which the vehicle C is traveling, and performing following travel for maintaining the set inter-distance when a preceding vehicle exists. The control device 20 of the control system 1 includes: the sign recognition unit 22 configured to recognize the road sign A urging the vehicle speed V to be decelerated to the predetermined speed; the vehicle speed adjustment unit 23 configured to, when the road sign A is recognized by the sign recognition unit 22 during the execution of the ACC, execute the vehicle speed adjustment control to adjust the vehicle speed V of the vehicle C; and the notification unit 24 configured to notify or warn the driver that the vehicle speed adjustment control is to be executed by the vehicle speed adjustment unit 23. The vehicle speed adjustment control includes the first control to decelerate the vehicle speed V to the first speed V1 when the road sign A is recognized by the sign recognition unit 22, and the second control to decelerate the vehicle speed V to the second speed V2 less than the first speed V1 in response to a deceleration request by the driver while the first control is executed.
   Since the vehicle speed adjustment control is configured to decelerate in two stages when the road sign A is recognized, by, it is possible to perform appropriate deceleration according to the road sign A urging deceleration through control of the control device 20 even while the ACC function is executed. Thereby, it is possible to improve the convenience of using the ACC function and maintain the comfort of the driver.
(2) The road sign A is a sign indicating that a protruding structure for urging deceleration is installed on the road surface of a road. It is possible to, when a protruding structure exist ahead of the vehicle, perform appropriate deceleration by control of the control device 20 even while the ACC function is executed. Thereby, it is possible to improve the convenience of using the ACC function and maintain the comfort of the driver.
(3) The vehicle control system 1 further includes the operation input device 14 (the deceleration request switch) that is operated by the driver and accepts a deceleration request. The ACC function is configured to stop operation by an operation of the brake pedal. The vehicle speed adjustment unit 23 is configured to, when the decelerate request switch is operated, execute the second control in a state of the operation of the ACC function being continued. The ACC function is normally configured to stop operation when the brake pedal is operated, and thus, if the driver operates the brake pedal before a speed breaker, the operation of the ACC function will stop. Therefore, the ACC function does not return to the operating state unless the driver performs a manual operation again, which makes the driver feel annoyed, and decreases the convenience of using the ACC function. Therefore, by allowing the operation of the ACC function to continue while decelerating to the second speed V2 in response to an operation of the deceleration request switch by the driver, it is possible to improve the convenience of using the ACC function.
(4) The first deceleration speed a1 for decelerating the vehicle speed V to the first speed V1 in the first control is less than the second deceleration rate a2 for decelerating the vehicle speed V to the second speed V2 in the second control. Since the first control automatically starts when the road sign A is recognized by the sign recognition unit 22, the first deceleration rate a1 is set to a small value so as to slowly decelerate the vehicle C without giving an excessive load on the driver. Furthermore, even when the road sign A is misdetected by the sign recognition unit 22, it is possible to reduce the impact given to the driver and travel by setting the first deceleration rate a1 to a small value. On the other hand, since the second control starts in response to an operation of the deceleration request switch which reflects the driver's intention to decelerate, the second deceleration rate a2 is set to a large value so as to enable sufficient deceleration before the speed breaker B. It is possible to, by setting each of the first deceleration rate a1 and the second deceleration rate a2 as described above, slowly decelerate at the stage of being away from the speed breaker B (the first control mode) and sufficiently decelerate at the stage of coming near to the speed breaker B (the second control mode), and it is possible to improve the performance of passing over the speed breaker B. Furthermore, it is possible to execute deceleration control which reflects the trend of an actual traffic flow of significantly decelerating just before the speed breaker B.
(5) The first deceleration rate a1 is set to be greater as the distance between the vehicle C and the road sign A at the time of the road sign A being recognized by the sign recognition unit 22 is shorter. The distance from the vehicle C to the road sign A at the time of the road sign A being recognized may fluctuate depending on the detection performance of the image pickup device 11 and the obstacle detection device 12, presence/absence of an obstacle that hinders visibility of the road sign A, and the like. Therefore, by setting the first deceleration rate a1 to be greater as the distance between the vehicle C and the road sign A is shorter, it is possible to sufficiently decelerate the vehicle speed V before reaching the speed breaker B.
(6) The vehicle speed adjustment unit 23 does not execute the vehicle speed adjustment control when the vehicle speed V exceeds the upper limit threshold Vt set in advance. When the vehicle speed V is in the high vehicle speed range exceeding the upper limit threshold Vt, the deceleration rate for decelerating to the first speed V1 in the first control increases, and the comfort is compromised. Furthermore, in the high vehicle speed range, the performance of detecting the road sign A by the image pickup device 11 and the obstacle detection device 12 decreases, and the accuracy of recognizing the road sign A by the sign recognition unit 22 decreases. Therefore, by providing the upper limit threshold Vt for the vehicle speed V for executing the vehicle speed adjustment control, the vehicle speed adjustment control can be prevented from being executed due to misdetection of the road sign A or the like, and a decrease in the comfort can be prevented.
(7) The vehicle speed adjustment unit 23 is configured to, when the road sign A is recognized by the sign recognition unit 22 during the execution of the ACC function, execute the vehicle speed adjustment control to decelerate the vehicle speed V of the vehicle C to the second speed V2 (the lowest speed). Here, the vehicle speed adjustment unit 23 is configured to allow, when the accelerator pedal is operated by the driver during the vehicle speed adjustment control, increase in the vehicle speed V according to the operation of the accelerator pedal, to end the vehicle speed adjustment control when the vehicle V according to the operation of accelerator pedal during the vehicle speed adjustment control exceeds the first speed V1 greater than the second speed V2, and to continue operation of the vehicle speed adjustment control in a case in which the accelerator pedal is operated during the vehicle speed adjustment control, and then, the accelerator pedal is released with the vehicle speed V being equal to the first speed V1 or less.
   A case is conceivable in which, when the vehicle speed adjustment control to decelerate the vehicle speed V is executed because of recognizing the road sign A urging deceleration, which exists ahead of the vehicle, the driver manually operates the accelerator pedal to accelerate, for example, for the reason of the vehicle speed having become slower than the vehicle speed V intended by the driver. As described above, the operation of the ACC function temporarily stops when the accelerator pedal is operated, the normal operation of the ACC function is then returned to when the driver releases the accelerator pedal. That is, when the driver releases the accelerator pedal, acceleration to the set vehicle speed V0 of the ACC function is performed. There is a possibility that, in a case in which the driver operates the accelerator pedal to accelerate while the vehicle speed adjustment control is executed and then releases the accelerator pedal, the vehicle speed may be undesirably increased to the set vehicle speed V0. In view of such circumstances, the vehicle speed adjustment control is configured to continue the operation when the vehicle speed V at the time of the accelerator pedal being released is equal to the first speed V1 or less. It is then possible to prevent the normal operation of the ACC function from resuming, and the vehicle speed V from unnecessarily accelerating, so that the effectiveness of the vehicle speed adjustment control is maintained. Furthermore, since the vehicle speed adjustment control ends and the normal operation of the ACC function is returned to when the vehicle speed V according to an operation of the accelerator pedal during the vehicle speed adjustment control exceeds the first speed V1 greater than the second speed V2, it is possible to execute control on which the driver's intention to accelerate is reflected.
(8) In the case of continuing the operation of the vehicle speed adjustment control after an operation of the accelerator pedal, the vehicle speed adjustment unit 23 decelerates the vehicle speed V to the second speed V2 (the lowest speed). Thereby, it is possible to sufficiently decelerate the vehicle speed V.
(9) In the case of continuing the operation of the vehicle speed adjustment control after an operation of the accelerator pedal, the vehicle speed adjustment unit 23 may maintain the vehicle speed V at the speed at the time of the accelerator pedal being released. Thereby, it is possible to execute the vehicle speed adjustment control which reflects the driver's intention.

### Modification

(1) In the embodiment described above, the vehicle speed adjustment control is configured to continue operating in a case in which the accelerator pedal is operated by the driver while the second control is executed, and thereafter, the vehicle speed at the time of the driver taking his/her foot off the accelerator pedal is equal to the first speed V1 or less. Then, in the case of continuing the operation of the vehicle speed adjustment control, the vehicle speed V is decelerated to the second speed V2 (the lowest speed). In the embodiment described above, an example is described in which the deceleration rate at this time is the second deceleration rate a2. However, the deceleration rate is not limited thereto. For example, the deceleration rate at the time of decelerating to the second speed V2 while continuing the operation of the vehicle speed adjustment control may be less than the first deceleration rate a1 for decelerating the vehicle speed V to the first speed V1 in the first control. The driver has operated the accelerator pedal with the intention to accelerate. Therefore, by slowly decelerating when the accelerator pedal is released, it is possible to stop the driver from stepping down the accelerator pedal again to accelerate and to perform control suitable for the driver's feeling.
(2) In the embodiment described above, a deceleration request by the driver's switch operation is used as the condition (f) for judging whether the second control condition is met or not. However, the configuration is not limited thereto, and various features may be used as the driver's deceleration request as long as it is possible to judge that the driver has an intention to decelerate, without limiting to a switch operation. For example, an operation of the brake pedal by the driver may be used as the driver's deceleration request. As described above, the ACC function is configured to stop the operation when the brake pedal is operated. Therefore, in the case of using an operation of the brake pedal by the driver as the driver's deceleration request, such a configuration is made as an exception to the normal operation of the ACC function.
(3) In the embodiment described above, when it is judged by the vehicle speed adjustment unit 23 that the end condition is met, the normal operation mode of the ACC function is returned to. Here, the acceleration rate in the case of accelerating to the set vehicle speed V0 of the ACC function may be a fixed set acceleration rate in the ACC function, or an acceleration rate different from the set acceleration rate may be used. For example, as shown in the constant-speed travel mode from the time t4 onwards in Figure 2, a configuration may be made such that the vehicle speed is increased at a small acceleration rate first, and then the vehicle speed is increased at a great acceleration rate. Thereby, it is possible to prevent the driver from feeling uncomfortable due to the rapid acceleration from a vehicle speed less than the first speed V1, which is the lower limit speed within the vehicle speed range of the ACC function.
(4) In the embodiment described above, the sign recognition unit 22 recognizes the road sign A based on image data input from the image pickup device 11. However, without being limited thereto, the sign recognition unit 22 may be configured to recognize existence of the road sign A or a protruding structure by information obtained by road-to-vehicle communication, map information, or the like.
(5) In the embodiment described above, a configuration is made such that the notification device 30 makes a buzzer sound when execution of the first control and the second control are started. However, without being limited thereto, a configuration may be made such that a buzzer sound is continuously issued while the first control and/or the second control are/is executed.
(6) In the embodiment described above, a description has been made on an example in which a speed breaker is installed as a protruding structure for urging deceleration, which is installed on the road surface of a road. However, without being limited thereto, the embodiment described above is applicable to a case in which a protruding structure of a type different from the speed breaker is installed. Furthermore, the first speed V1, the second speed V2 (the lowest speed), and the like described above are not limited to the values described above. Each of the first speed V1, the second speed V2 (the lowest speed), and the like may be set to a value suitable for the type of a protruding structure.

Several embodiments of the present invention have been described above. The present invention, however, is not limited to the above embodiments, and further various modifications and changes are possible within the scope of the present invention.

### [Reference Signs List]

- 1: Vehicle control system
- 20: Control device
- 21: ACC control unit
- 22: Sign recognition unit
- 23: Vehicle speed adjustment unit
- 24: Notification unit
- A: Road sign
- B: Speed breaker (protruding structure)
- C: Vehicle

## Claims

1. A vehicle control system configured to execute an ACC function of performing constant-speed travel according to a set vehicle speed when a preceding vehicle does not exist in a lane in which a vehicle is traveling, and performing following travel for maintaining a set inter-distance when a preceding vehicle exists, the vehicle control system comprising:
a sign recognition unit configured to recognize a road sign urging vehicle speed to be decelerated to a predetermined speed;
a vehicle speed adjustment unit configured to, when the road sign is recognized by the sign recognition unit during execution of the ACC function, execute vehicle speed adjustment control to adjust the vehicle speed of the vehicle; and
a notification unit configured to notify a driver that the vehicle speed adjustment control is to be executed by the vehicle speed adjustment unit; wherein
the vehicle speed adjustment control includes:
first control to decelerate the vehicle speed to a first speed when the road sign is recognized by the sign recognition unit; and
second control to decelerate the vehicle speed to a second speed less than the first speed in response to a deceleration request by the driver while the first control is executed.

2. The vehicle control system according to claim 1, wherein
the road sign is a sign indicating that a protruding structure for urging deceleration is installed on a road surface of a road.

3. The vehicle control system according to claim 1 or 2, further comprising
a deceleration request switch that is operated by the driver and accepts the deceleration request, wherein:
the ACC function is configured to stop operation by an operation of a brake pedal; and
the vehicle speed adjustment unit is configured to, when the decelerate request switch is operated, execute the second control in a state of the operation of the ACC function being continued.

4. The vehicle control system according to claim 1 or 2, wherein
a first deceleration rate for decelerating the vehicle speed to the first speed in the first control is less than a second deceleration rate for decelerating the vehicle speed to the second speed in the second control.

5. The vehicle control system according to claim 4, wherein
the first deceleration rate is set to be greater as a distance between the vehicle and the road sign at time of the road sign being recognized by the sign recognition unit is shorter.

6. The vehicle control system according to claim 1 or 2, wherein
the vehicle speed adjustment unit does not execute the vehicle speed adjustment control when the vehicle speed exceeds an upper limit threshold set in advance.
